# EUROPEAN PATENT APPLICATION

(11) **EP 4 177 753 A1**
(43) Date of publication of application: **10.05.2023**
(21) Application number: 21851184.8
(22) Date of filing: 23.07.2021
(51) Int. Cl.: G06F 9/54, G06F 21/00

(54) **REMOTE SERVICE INVOKING METHOD, DEVICE, AND SYSTEM, AND STORAGE MEDIUM**

(30) Priority: 31.07.2020 CN 202010758320
(71) Applicant: Huawei Technologies Co., Ltd., Shenzhen, Guangdong 518129 (CN)
(72) Inventor: BAO, Kunchao, Shenzhen, Guangdong 518129 (CN)
(74) Representative: Goddar, Heinz J.
(86) International application number: PCT/CN2021/108255
(87) International publication number: WO 2022/022428

(57) **Abstract**

Embodiments of the present invention provide a remote service invoking method based on an invoking or target device, a device, and a system. The remote service invoking method based on the invoking device includes: sending a remote service invoking request to a target device, where the remote service invoking request includes an invoking device ID, an invoking application ID, and target service information; receiving a permission information invoking instruction sent by the target device, where the permission information invoking instruction includes the invoking application ID and the target service information; and sending corresponding permission information to the target device according to the permission information invoking instruction, where the permission information is used to reflect whether the invoking application has an invoking permission of a target service. According to this solution, authorization is performed only once at an invoking device end and the corresponding permission information is sent to the target device for authentication. In addition, after authentication of the target device succeeds, remote service invoking can be implemented. In this way, a user does not need to perform authentication operations on a plurality of devices for a plurality of times. This simplifies an authorization operation process, and improves user experience.

## Description

### TECHNICAL FIELD

The present invention relates to the field of permission verification technologies, and in particular, to a remote service invoking method, a device, a system, and a storage medium.

### BACKGROUND

With continuous development of smart terminals, a user has more intelligent electronic devices, such as a smartphone, a smart TV, and a smartwatch. However, when using an intelligent electronic device, the user wants to invoke a target service of another electronic device. For example, the user wants to invoke a camera of a smart TV to perform photographing when a WeChat video call is performed on a mobile phone. However, an android system has a complete application permission management mechanism. For example, when an application invokes a system service or device that related to user privacy, for example, invokes a camera or a recording device, the application needs to be authorized by the user. However, an existing android application permission management mechanism has the following disadvantages when distributed cross-device invoking is performed:

The user needs to perform authorization confirmation on both an invoking end and an invoked end. As a result, an authorization action is complex and user experience is greatly reduced.

### SUMMARY

Embodiments of the present invention provide a remote service invoking method, a device, a system, and a storage medium. In the remote service invoking method, in a process in which an invoking device sends a remote service invoking request to a target device, authorization is performed only once at an invoking device end and corresponding permission information is sent to the target device for authentication. In addition, after authentication of the target device succeeds, remote service invoking can be implemented. In this way, a user does not need to perform authentication operations on a plurality of devices for a plurality of times. This simplifies an authorization operation process, and improves user experience.

An embodiment of the present invention provides a remote service invoking method based on an invoking device, including:
sending a remote service invoking request to a target device, where the remote service invoking request includes an invoking device ID, an invoking application ID, and target service information;
receiving a permission information invoking instruction sent by the target device, where the permission information invoking instruction includes the invoking application ID and the target service information; and
sending corresponding permission information to the target device according to the permission information invoking instruction, where the permission information is used to reflect whether the invoking application has an invoking permission of a target service.

Further, before the sending a remote service invoking request to a target device, the method further includes:
in response to the remote service invoking request, determining whether the invoking application requests to invoke the target service for the first time, and if yes, performing a permission determining process, or if no, performing the process of sending a remote service invoking request to a target device.

The permission determining process includes:
determining the permission information based on a user and locally storing the permission information.

Further, the process of determining the permission information based on a user and locally storing the permission information includes:
generating an authorization determining interface, so that the user selects, based on the authorization determining interface, whether the invoking application has the invoking permission of the target service.

An embodiment of the present invention further provides a remote service invoking method based on a target device, including:
receiving a remote service invoking request sent by an invoking device, where the remote service invoking request includes an invoking device ID, an invoking application ID, and target service information;
sending a permission information invoking instruction to the invoking device, where the permission information invoking instruction includes the invoking application ID and the target service information;
receiving permission information sent by the invoking device, where the permission information is used to reflect whether the invoking application has an invoking permission of a target service; and
determining, based on the permission information, whether the invoking application has the invoking permission of the target service, and if yes, performing invoking of the target service by the invoking application in the invoking device.

Further, before the sending a permission information invoking instruction to the invoking device, the method further includes:
allocating a distributed user ID as an invoking body ID based on the invoking device ID and the invoking application ID, where the distributed user ID is used to identify a device and an application; and
determining a type of the invoking body ID, and if the type of the invoking body ID is the distributed user ID, performing the process of sending a permission information invoking instruction to the invoking device, or if the type of the invoking body ID is a local ID, performing local invoking permission verification.

The method further includes: in the process of determining, based on the permission information, whether the invoking application has the invoking permission of the target service, if no, rejecting the invoking of the target service by the invoking application in the invoking device, and returning invoking failure information to the invoking device.

An embodiment of the present invention further provides an invoking device. The invoking device includes a processor and a memory. The memory is configured to store at least one instruction. When the instruction is loaded and executed by the processor, the remote service invoking method based on an invoking device is implemented.

An embodiment of the present invention further provides a target device. The target device includes a processor and a memory. The memory is configured to store at least one instruction. When the instruction is loaded and executed by the processor, the remote service invoking method based on a target device is implemented.

An embodiment of the present invention further provides a system. The system includes at least one invoking device and at least one target device.

An embodiment of the present invention further provides a computer-readable storage medium. The computer-readable storage medium stores a computer program. When the computer program is executed by a processor, the remote service invoking method based on an invoking device or the remote service invoking method based on a target device is implemented.

According to the foregoing technical solution, the remote service invoking request is sent to the target device by using the invoking device. The remote service invoking request includes the invoking device ID, the invoking application ID, and the target service information. The target device may be enabled to identify the invoking device, the invoking application, and the target service by using the received remote service invoking request. In the process of sending the remote service invoking request to the target device by the invoking device, authorization needs only to be performed once at an invoking device end and corresponding permission information is sent to the target device for authentication, and the remote service invoking can be implemented after the authentication of the target device succeeds. In this way, the user does not need to perform authentication operations on a plurality of devices for a plurality of times. This simplifies an authorization operation process. Only one authorization needs to be completed at the invoking device end, and the target device requests the corresponding permission information of the invoking body at the invoking device end for authentication. In addition, the user performs a selection operation only on an authorization determining interface displayed on the invoking device when the invoking body requests to invoke the target service for the first time. Therefore, the permission verification method in this application can identify the invoking body by using the invoking body ID in cross-device invoking, and provides a distributed authentication interface, to perform authentication on cross-device invoking bodies, thereby improving user experience.

### BRIEF DESCRIPTION OF DRAWINGS

FIG. 1 is a schematic flowchart of a remote service invoking method based on an invoking device according to an embodiment of the present invention;
FIG. 2 is a schematic diagram of a call transfer service authorization confirmation according to an embodiment of the present invention;
FIG. 3 is a schematic flowchart of a remote service invoking method based on a target device according to an embodiment of the present invention;
FIG. 4 is a schematic diagram of a call transfer service provided by a smart TV according to an embodiment of the present invention;
FIG. 5 is a schematic diagram of connection and interaction between an invoking device and a target device according to an embodiment of the present invention;
FIG. 6A to FIG. 6C are a schematic diagram of interaction between an invoking device and a target device according to Embodiment 1 of the present invention;
FIG. 7A to FIG. 7C are a schematic diagram of interaction between an invoking device and a target device according to Embodiment 2 of the present invention;
FIG. 8A to FIG. 8C are a schematic diagram of interaction between an invoking device and a target device according to Embodiment 3 of the present invention;
FIG. 9 is a schematic diagram of a structure of an invoking device according to an embodiment of the present invention;
FIG. 10 is a schematic diagram of a structure of a target device according to an embodiment of the present invention; and
FIG. 11 is a schematic diagram of a structure of a distributed system according to an embodiment of the present invention.

### DESCRIPTION OF EMBODIMENTS

To make the objectives, technical solutions, and advantages of embodiments of the present invention clearer, the following clearly and completely describes the technical solutions in embodiments of the present invention with reference to the accompanying drawings in embodiments of the present invention. It is clear that the described embodiments are some but not all of embodiments of the present invention. Other embodiments obtained by persons of ordinary skill in the art based on embodiments of the present invention without creative efforts shall fall within the protection scope of the present invention.

The following briefly describes a cross-device authentication process in the conventional technology:

In distributed cross-device invoking, a proxy service is added to an invoked device. For example, a device A invokes a service on a device B, and the device B has a proxy service. The device B verifies permission of the proxy service, and indirectly authenticates an application that initiates the cross-device invoking.

Based on the cross-device authentication process in the conventional technology, it may be determined that:

When cross-device invoking is performed in the conventional technology, a target device B provides a proxy service for an invoking device A, and the target device B authenticates the invoking device A. Herein, an invoking body that can be identified by the target device B for invoking of a target service is the invoking device A. However, it is not possible to identify which invoking application in the invoking device is the invoking body.

According to the cross-device authentication process in the conventional technology, it may be further determined that:

When cross-device invoking is performed in the conventional technology, when the invoking device A requests to invoke a service of the target device B, the invoking device A needs to locally perform one authorization. When receiving a target service invoking request sent by the invoking device A, the target device provides a proxy service for the invoking device A, so that a user authorizes the invoking device A, and provides the corresponding target service when the authentication performed by the target device B on the invoking device A succeeds.

To avoid the foregoing defects in the conventional technology, embodiments of the present invention provide the following technical solutions to overcome the foregoing defects in the conventional technology, which are specifically as follows:

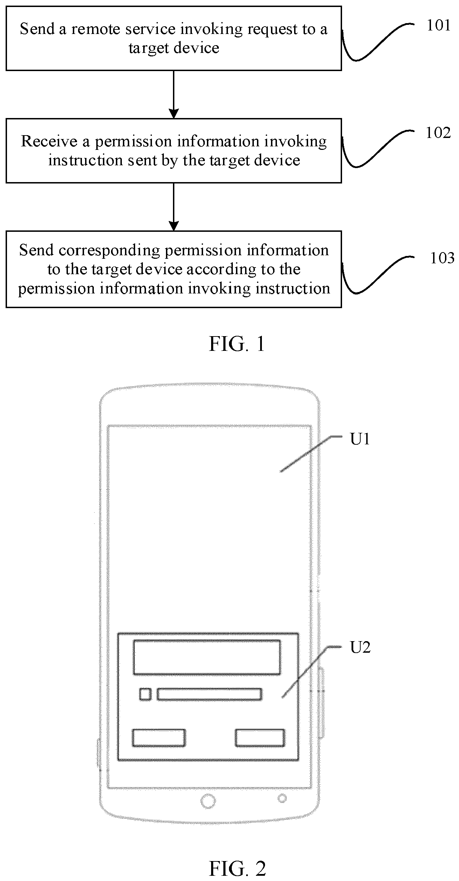

FIG. 1 is a schematic flowchart of a remote service invoking method based on an invoking device according to an embodiment of the present invention. As shown in FIG. 1, the method includes the following steps:

Step 101: Send a remote service invoking request to a target device.

Step 102: Receive a permission information invoking instruction sent by the target device.

Step 103: Send corresponding permission information to the target device according to the permission information invoking instruction.

### About Step 101

In a plurality of running devices (for example, devices running an Android system), when a user wants to invoke a target service of another device by using an application in one device, the user may send the remote service invoking request to the device. A device at an invoking end may be considered as the invoking device, the application that sends the remote service invoking request may be considered as an invoking application, and a device at an invoked end may be considered as the target device. The target service may be a system service, or may be a service developed by a third party that can be remotely invoked. The remote service invoking request sent by the invoking device to the target device includes an invoking device ID, an invoking application ID, and target service information. For example, when the user makes a video call with a friend by using a "Changlian" application in a Huawei smartphone at home, the user selects to invoke a "call transfer service" on a smart TV at home to transfer images and sounds. That is, the Huawei Changlian APP in the smartphone may send, to the smart TV, a remote service invoking request for invoking the "call transfer service" on the smart TV The remote service invoking request includes a smartphone ID, a Changlian ID, and information used to identify the "call transfer service".

It should be noted that, when the invoking application invokes the target service for the first time, the user needs to authorize the invoking application to invoke the target service. Therefore, before sending the remote service invoking request to the target device, in response to the remote service invoking request, whether the invoking application invokes the target service for the first time is determined, and if yes, a permission determining process is performed. The permission determining process includes: generating an authorization determining interface on an interface of the invoking application of the invoking device, so that the user selects, based on the authorization determining interface, whether the invoking application has an invoking permission of the target service.

In this embodiment, limitation may further be as follows: When the invoking application invokes the target service for the first time and the permission required for the invoked service is a danger level (for example, invoking a camera or a microphone device service), the user needs to authorize the invoking of the target service by the invoking application. Similarly, before the remote service invoking request is sent to the target device, in response to the remote service invoking request, whether the invoking application requests to invoke the target service whose permission level is a danger level for the first time is determined, and if yes, a permission determining process is performed. The permission determining process includes: generating an authorization determining interface on an interface of the invoking application of the invoking device, so that the user selects, based on the authorization determining interface, whether the invoking application has an invoking permission of the target service.

For example, as shown in FIG. 2, when the "Changlian" APP of the invoking device (smartphone) requests to invoke the "call transfer service" on the target device (smart TV) for the first time, an authorization determining interface U2 is generated over a "Changlian" APP interface U1. In addition, prompt information for prompting the user to perform authorization confirmation is displayed on the authorization determining interface U2, such as: "whether to allow Changlian to invoke the call transfer service of the smart TV", so that the user can authorize the request of "Changlian" App to invoke the "call transfer service". For example, after the user clicks the "always allow" button on the authorization determining interface, the authorization operation is completed, that is, the "Changlian" APP on the smartphone has an invoking permission of the "call transfer service" on the smart TV In other words, the "Changlian" APP on the smartphone has the permission to a camera and a microphone of the smart TV If the user clicks the "forbidden" button on the authorization determining interface, authorization is denied, that is, the "Changlian" APP on the smartphone does not have the invoking permission of the "call transfer service" on the smart TV

### About Step 102

After the target device receives the remote service invoking request sent by the invoking device, to determine whether the invoking application that applies for the remote service invoking request in the invoking device has a corresponding invoking permission, the target device applies to the invoking device for invoking corresponding permission information, and the invoking device receives the permission information invoking instruction sent by the target device. In addition, the permission information invoking instruction includes the invoking application ID and the target service information. For example, the "Changlian" APP on the smartphone invokes the "call transfer service" on the smart TV, and the smart TV invokes, from the smartphone, the permission information that is about whether the "Changlian" APP can access the camera and the microphone of the smart TV The smartphone receives a permission information invoking instruction that is sent by the smart TV and that is about whether the "Changlian" APP can access the camera and the microphone of the smart TV The invoking instruction of the permission information further includes an application ID (an ID of the "Changlian" APP) and target service information (invoking the "call transfer service" on the smart TV).

### About Step 103

After receiving the permission information invoking instruction sent by the target device, the invoking device sends corresponding permission information to the target device according to the permission information invoking instruction. Specifically, after receiving the permission information invoking instruction and the target service information sent by the target device, the invoking device identifies a corresponding invoking application ID based on the invoking application ID in the permission information invoking instruction, determines a permission type based on the target service information in the permission information invoking instruction, further queries permission information that is of the invoking application and that is identified in locally stored permission data and that is related to the permission type, where the permission information is used to reflect whether the invoking application has an invoking permission of the target service, and sends the queried permission information to the target device. For example, the smartphone receives the permission information invoking instruction that is sent by the smart TV and that is about whether the "Changlian" APP can access the camera and the microphone of the smart TV, where the permission information invoking instruction further includes the application ID (the ID of the "Changlian" APP) and the target service information (invoking the "call transfer service" on the smart TV), identifies, based on the application ID, that the invoking application is the "Changlian" APP, identifies, based on the target service information, that permission types include a smart TV camera invoking permission and a smart TV microphone invoking permission, further queries permission information that is of the "Changlian" APP in the stored permission data and that is about the smart TV camera invoking permission and the smart TV microphone invoking permission, and sends the queried permission information to the smart TV

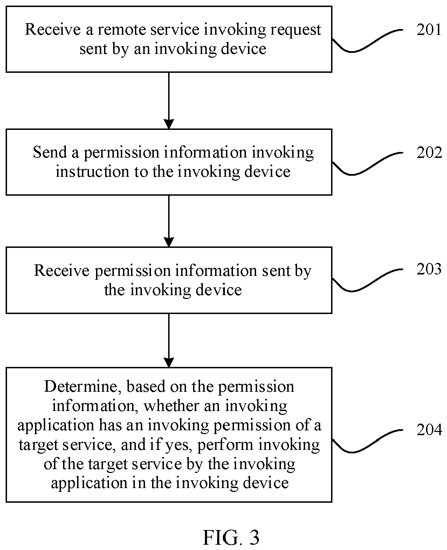

FIG. 3 is a schematic flowchart of a remote service invoking method based on a target device according to an embodiment of the present invention. As shown in FIG. 3, the method includes the following steps.

Step 201: Receive a remote service invoking request sent by an invoking device.

Step 202: Send a permission information invoking instruction to the invoking device.

Step 203: Receive permission information sent by the invoking device.

Step 204: Determine, based on the permission information, whether an invoking application has an invoking permission of a target service, and if yes, perform invoking of the target service by the invoking application in the invoking device.

### About Step 201

The target device receives the remote service invoking request sent by the invoking device, where the remote service invoking request includes an invoking device ID, an invoking application ID, and target service information. For example, when a user makes a video call with a friend by using a "Changlian" application in a Huawei smartphone at home, the user selects to invoke a "call transfer service" on a smart TV at home to transfer images and sounds. That is, the Huawei Changlian APP in the smartphone may send, to the smart TV, a remote service invoking request for invoking the "call transfer service" on the smart TV The remote service invoking request includes a smartphone ID, a Changlian ID, and information used to identify the "call transfer service".

After receiving the remote service invoking request sent by the invoking device, the target device may allocate a distributed user ID (Distributed User Identification, DUID) as an invoking body ID based on a device ID (device ID) and an invoking application ID (User ID, UID) in the remote service invoking request, and initiate target service invoking based on the remote service invoking request, where the initiated target service invoking includes the distributed user ID (DUID), to indicate an invoking body of the current invoking.

Further, after receiving the target service invoking, a target service end needs to determine whether the invoking body has an invoking permission for invoking the target service. The target service end first needs to determine a type of the invoking body ID, and if the type of the invoking body ID is a distributed user ID (DUID), the target service end determines that the current target service invoking is cross-device remote service invoking, and needs to send a permission information invoking instruction to the invoking device, to determine whether the invoking body has the invoking permission for invoking the target service; or if the type of the invoking body ID is a local ID, the target service end determines that the current target invoking is local invoking, and performs local invoking permission verification.

When the cross-device remote service invoking is performed, the type of the invoking body ID of the target service invoking request received by the target service end of the target device is the distributed user ID (DUID), and therefore the permission information invoking instruction needs to be sent to the invoking device, that is, step 202 is performed.

### About Step 202

As described in step 201, to determine whether the invoking body has the invoking permission for invoking the target service of the target device, the permission information invoking instruction needs to be sent to the invoking device. Specifically, the permission information invoking instruction needs to specify the invoking body and the target service. However, in the target device, the invoking body ID is the distributed user ID (DUID), and because the invoking device cannot identify which invoking application in the invoking device corresponding to the distributed user ID, when the target device sends the permission information invoking instruction to the invoking device, the permission information invoking instruction needs to include the invoking body ID identifiable by the invoking device. In addition, because the distributed user ID (DUID) is obtained by allocating the device ID (device ID) and the invoking application ID (UID) of the invoking device, and an invoking action of the current permission information invoking instruction is interaction between the target device and the invoking device, the invoking device ID does not need to be emphasized, and only the invoking application needs to be specified. Therefore, the permission information invoking instruction may include the invoking application ID. Further, the invoking device further needs to specify a target service corresponding to the current permission information invoking. Therefore, the permission information invoking instruction further needs to include the target service information. In conclusion, the target device sends the permission information invoking instruction to the invoking device, where the permission information invoking instruction includes the invoking application ID and the target service information.

### About steps 203 and 204

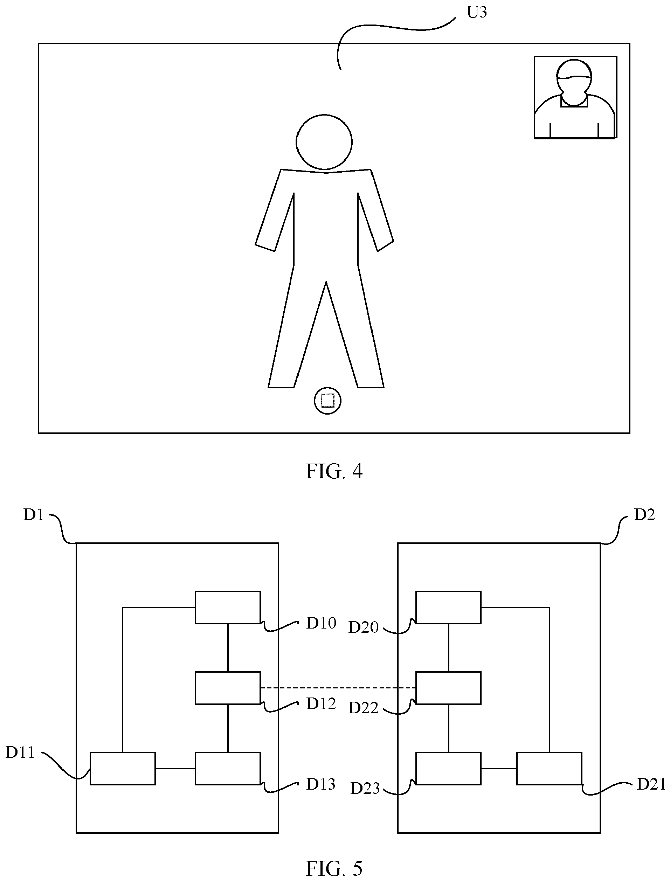

After receiving the permission information invoking instruction sent by the target device, the invoking device queries corresponding permission information, and sends the queried permission information to the target device. The target device receives the permission information sent by the invoking device, and performs authentication on the permission information, to determine whether the invoking application (invoking body) in the invoking device has the invoking permission for invoking the target service in the device (the target device). After authentication, if the invoking application has the invoking permission of the target service, invoking of the target service in the target device by the invoking application in the invoking device is performed. For example, the authentication performed by the smart TV on the "Changlian" application on the smartphone succeeds, and then, the "call transfer service" invoked by the "Changlian" application succeeds. As shown in FIG. 4, the smart TV executes the "call transfer service", the video call service is transferred to a smart TV end for execution, a picture is taken by using a camera of the smart TV, a video call interface U3 is displayed by using a screen of the smart TV, and a microphone of the smart TV is used to collect voice conversation content of the user. Further, an invoking success result may be fed back to the invoking device. After authentication, if the invoking application does not have the invoking permission of the target service, invoking of the target service in the target device by the invoking application in the invoking device is rejected, and an invoking failure result is fed back to the invoking device.

Different from a cross-device invoking authentication manner in the conventional technology, when the invoking application (APP) in the invoking device requests to invoke the target service of the target device by using the cross-device invoking and authentication manner corresponding to the foregoing steps 101 to 103 and 201 to 204, the remote service invoking request is sent to the target device, where the remote service invoking request includes the invoking device ID, the invoking application ID, and the target service information. The target device may specify the invoking body by using the invoking device ID and the invoking application ID in the remote service invoking request, and may further allocate a distributed user ID as the invoking body ID based on the invoking device ID and the invoking application ID.

When authenticating the invoking body, the target device invokes permission information that is of the invoking body and that is stored in the invoking device and that is related to the invoking target service, and authenticates the received permission information, without requiring the user to perform another authorization operation on the target device.

FIG. 5 is a schematic diagram of interaction between an invoking device and a target device according to an embodiment of the present invention. As shown in FIG. 5, a permission verification procedure of cross-device remote service invoking is completely described with reference to interaction between the invoking device and the target device. A device D1 and a device D2 are in a distributed scenario. Both the device D1 and the device D2 are devices running an Android system, the device D1 is used as an invoking device, the device D2 is used as a target device, and the APPD 10 on the device D1 invokes a target service D20 on the device D2 in a cross-device manner. The target service D20 may be a system service, or may be a service developed by a third party that can be remotely invoked.

As shown in FIG. 5, the distributed scenario in which the device D1 and the device D2 are located provides a distributed execution framework service (Distributed Execution Framework Service, DEFS) and a distributed permission management service (Distributed Permission Management Service, DPMS). The DEFS is configured to provide cross-device communication and invoking agents in the distributed scenario, and provide an interface for the device 1 to invoke a target service of the device 2. The DPMS provides a distributed permission verification (authentication) interface for an Android native permission management service (Permission Management Service, PMS) in each device.

Comparison is made with reference to the remote service invoking method based on the invoking device and the target device and the cross-device invoking authentication manner in the conventional technology, which is specifically as follows:

First, in cross-device invoking processing in the conventional technology, different applications of an invoking body cannot be distinguished, that is, the invoking application cannot be further refined and distinguished on the basis of the invoking device, so that authorization cannot be performed for different applications in a same invoking device.

However, in the technical solution claimed in this application, when the invoking application (APP) D 10 in the invoking device requests to invoke the target service D20 of the target device, the invoking device and the target device may communicate with each other by using the DEFS provided in the distributed scenario in which the invoking device and the target device are located. Specifically, the invoking device sends a remote service invoking request to the DEFS (D22) of the target device by using the DEFS (D12), where the remote service invoking request includes an invoking device ID, an invoking application ID, and target service information. The target device may specify the invoking body by using the invoking device ID and the invoking application ID in the remote service invoking request, and may further allocate a distributed user ID as the invoking body ID based on the invoking device ID and the invoking application ID.

Second, in the conventional technology, during cross-device invoking processing, authorization confirmation needs to be performed twice on an invoking end and an invoked end. That is, when the invoking application in the invoking device requests to invoke the target service of the target device, the user needs to perform authorization confirmation once on the invoking device, and locally store the permission information after the authorization confirmation in the invoking device. After receiving the target service invoking request of the invoking device, the user performs authorization confirmation again on the target device end, and similarly, locally stores the permission information after the authorization confirmation in the target device. The target service invoking can be implemented only after authentication is completed on both the invoking device and the target device, and the process is complicated. In addition, in the conventional technology, there is an unauthorized invoking infringement in the permission verification processing. Specifically, because the invoking device and the target device each store permission information about a target service invoking request, if the invoking device end cancels the permission and the target device end does not change a permission information state, when the invoking device sends the same target service invoking request to the target device, the target device end is still in an authorized state, and the unauthorized invoking infringement occurs.

However, in the technical solution claimed in this application, the user authorization confirmation is only performed at the invoking device end, and the permission information obtained by authorization confirmation is stored at the invoking device end, and when the target device needs authentication, corresponding permission information stored in the invoking device is requested to be invoked for authentication. The permission information of the invoking device is used as a unique standard, to avoid a problem that in the conventional technology, permission information about invoking a same target service is different between the invoking device and the target device. When authenticating the invoking body, the target device invokes permission information that is of the invoking body and that is stored in the invoking device and that is related to the invoking target service, and authenticates the received permission information, without requiring the user to perform another authorization operation on the target device.

Specifically, the following embodiments respectively describe a process in which the APP (D 10) on the device 1 invokes the target service on the device 2 in a cross-device manner in different authorization situations.

### Embodiment 1

An authorization state type corresponding to this embodiment is that a "Changlian" APP (D10) in a smartphone invokes a "call transfer service" on a smart TV for the first time, and is used to not authorize the invoking operation.

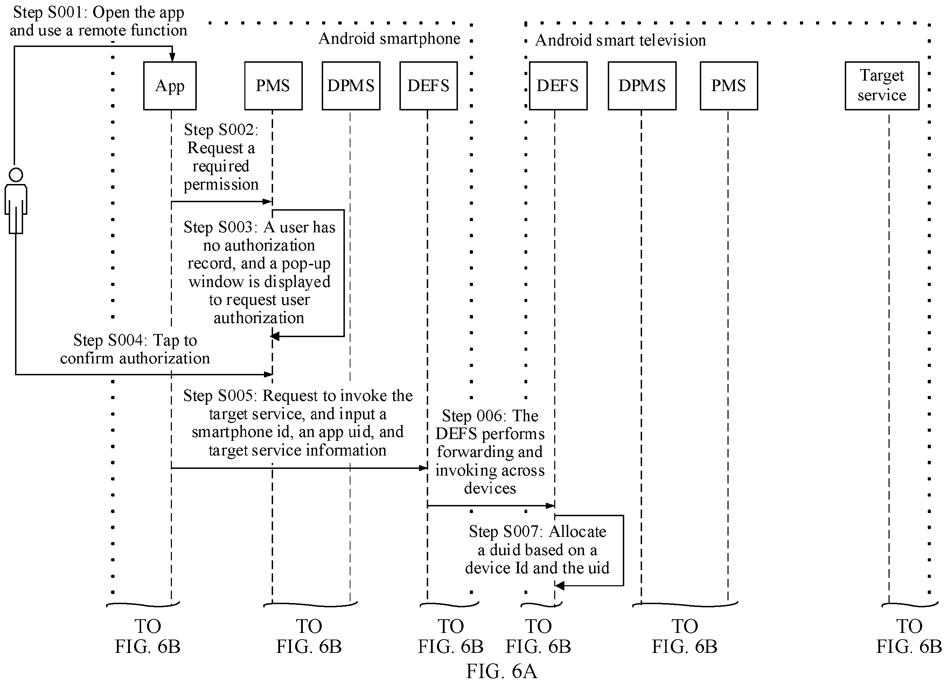

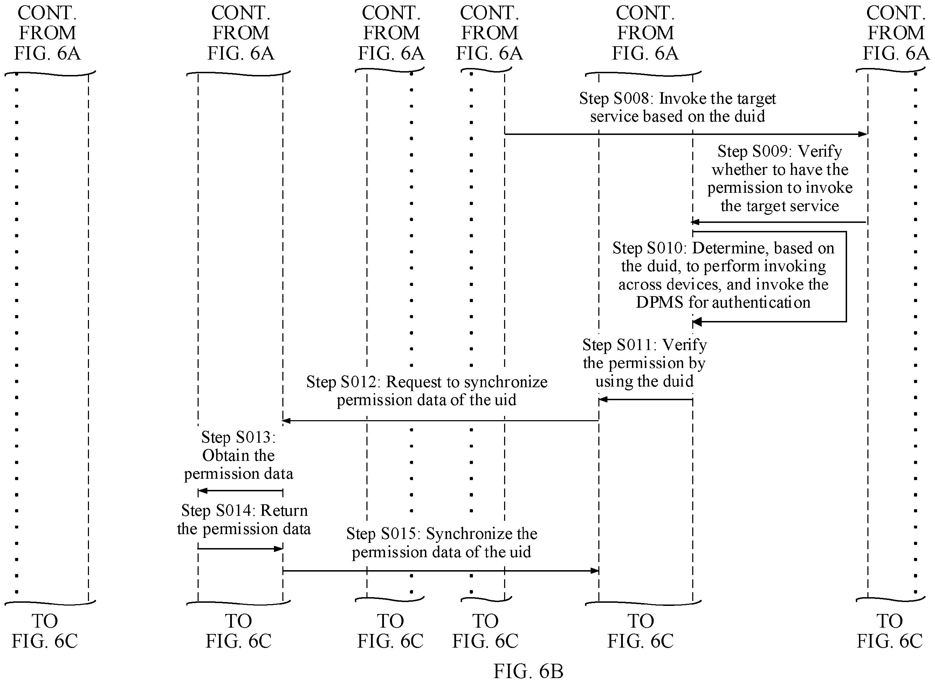

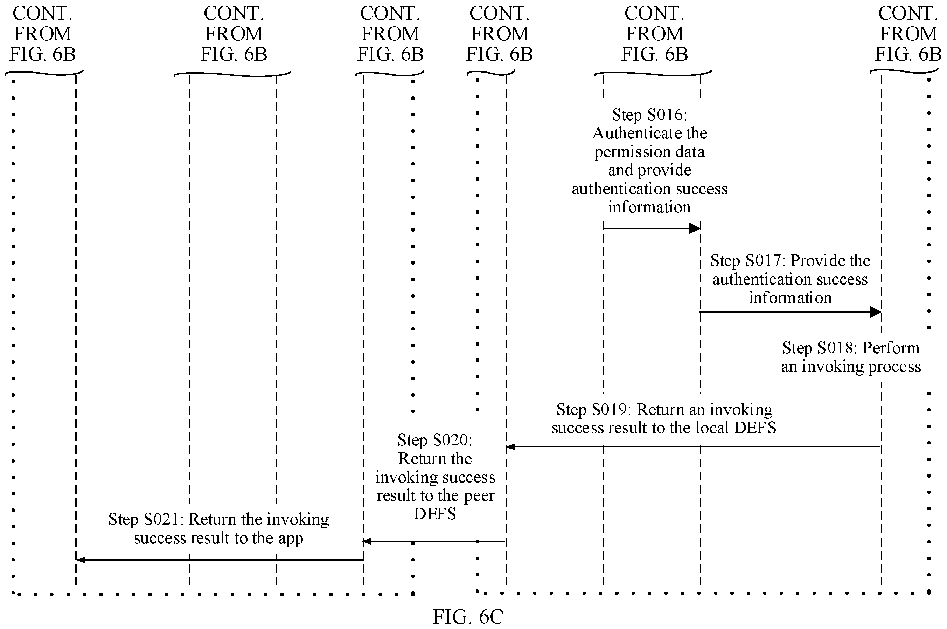

FIG. 6A to FIG. 6C are a schematic diagram of interaction between an invoking device and a target device according to Embodiment 1 of the present invention. As shown in FIG. 6A to FIG. 6C, a cross-device invoking process in Embodiment 1 is implemented by using a plurality of steps shown in the accompanying drawing. Specifically, the embodiment formed by the plurality of steps is as follows:

Step S001: A user opens a "Changlian" APP (D10) on a smartphone, and selects to use a "call transfer service" on a smart TV

Step S002: The "Changlian" APP (D10) invokes a PMS (D11) interface of the smartphone to request permission required for invoking the "call transfer service" on the smart TV

Step S003: In response to request information of invoking the "call transfer service" on the smart TV by the "Changlian" APP (D10), the PMS (D11) determines whether the request information is that the "Changlian" APP (D10) first requests to invoke the "call transfer service" on the smart TV When determining that the request information is the first request of the "Changlian" APP (D10) and a permission level of a permission required by invoking the "call transfer service" (a camera and a microphone of the smart TV need to be invoked, and invoking permissions of the two devices are danger levels) is a danger level, as shown in FIG. 2, the PMS (D11) generates an authorization determining interface U2 over a "Changlian" APP (D10) interface U1 on the smartphone.

Step S004: After the user clicks the "always allow" button on the authorization determining interface, the PMS (D 11) obtains an operation result (authorization result) of the user on the authorization determining interface U2, and stores the authorization result in a local corresponding database as permission information for the "Changlian" APP (D10) to request to invoke the "call transfer service" on the smart TV

Step S005: When the "Changlian" obtains, through a PMS (D11) interface, the permission information for invoking the "call transfer service" on the smart TV, the "Changlian" further send a smartphone ID (device ID), a "Changlian" ID (APP ID), and information (remote service invoking request) used to identify the "call transfer service" (target service) to a DEFS (D12), to invoke a DEFS (D12) interface of the smartphone to communicate with the smart TV

Step S006: The DEFS (D12) sends the remote service invoking request to the smart TV, where the remote service invoking request sent to the smart TV includes the smartphone ID (device ID), the "Changlian" ID (APP ID), and the information used to identify the "call transfer service" (target service).

Step S007: After receiving the remote service invoking request sent by the smartphone, a DEFS (D22) of the smart TV allocates a distributed user ID in a resource pool of a reserved distributed user ID (DUID) of the smart TV based on the smartphone ID and the "Changlian" ID in the remote service invoking request.

Step S008: The DEFS (D22) of the smart TV uses the allocated distributed user ID as an invoking body ID in the current cross-device invoking operation, and sends a target service invoking request of the invoking body to a target service (D20) of the smart TV, where the target service invoking request includes the invoking body ID. In this case, the invoking body ID is a DUID obtained by allocating based on the smartphone ID and the "Changlian" ID.

Step S009: After receiving the target service invoking request, the target service invokes an android PMS (D21) native authentication interface of the smart TV based on the DUID to perform permission verification, to determine whether the "Changlian" APP (D10) has an invoking permission to invoke the "call transfer service" on the smart TV

Step S010: The PMS (D21) of the smart TV identifies that a type of the invoking body ID in the target service invoking request is the DUID, and determines that the target service invoking request of the invoking body is a cross-device remote service invoking request.

Step S011: When determining that the target service invoking request of the invoking body is the cross-device remote service invoking request, the PMS (D21) of the smart TV directly invokes a DPMS (D23) interface of the smart TV to request authentication.

Step S012: After receiving an authentication request of whether the invoking body has the invoking permission to invoke the target service, the DPMS (D23) of the smart TV requests to invoke the DPMS (D13) of the smartphone in a cross-device manner, to request the permission information that is of the invoking body "Changlian" and that is about invoking the "call transfer service". Specially, the DPMS (D23) invokes the DEFS (D22) interface of the smart TV to communicate with the smartphone, and sends an invoking instruction of the permission information to the DEFS (D12) of the smartphone, where the permission information invoking instruction sent to the DEFS (D12) of the smartphone includes the "Changlian" ID and the information used to identify the "call transfer service".

Step S013: The DEFS (D12) of the smartphone sends the received permission information invoking instruction to the DPMS (D13) of the smartphone, and the DPMS (D13) of the smartphone requests the PMS (D11) of the smartphone according to the permission information invoking instruction for the "Changlian" to invoke the permission information for the "call transfer service" on the smart TV

Step S014: The PMS (D11) of the smartphone feeds back, to the DPMS (D13) of the smartphone, queried permission information for the "Changlian" to invoke the "call transfer service" on the smart TV

Step S015: The DPMS (D13) of the smartphone further sends the permission information for the "Changlian" to invoke the "call transfer service" on the smart TV to the DEFS (D22) of the smart TV through the DEFS (D12) of the smartphone, the DEFS (D22) of the smart TV further feeds back the permission information for the "Changlian" to invoke the "call transfer service" on the smart TV to the DPMS (D23) of the smart TV, to implement synchronization of the invoking permission of the "Changlian" APP between the smartphone and the smart TV

Step S016: The DPMS (D23) of the smart TV authenticates the permission information for the "Changlian" to invoke the "call transfer service" on the smart TV, to determine whether the "Changlian" has the invoking permission of the "call transfer service" on the smart TV Because a user has previously performed authorization, an authentication result is that the "Changlian" has the invoking permission to invoke the "call transfer service" on the smart TV, and determines that the authentication succeeds. Further, the authentication result is sent to the PMS (D21) of the smart TV

Step S017: When the authentication performed by the DPMS (D23) on the permission information for the "Changlian" to invoke the "call transfer service" on the smart TV succeeds, the PMS of the smart TV further feeds back the authentication result to the target service (D20) of the smart TV

Step S018: The target service (D20) executes the call transfer service after obtaining the information indicating that the authentication succeeds, and the invoking succeeds.

Step S019: The target service (D20) sends an invoking success result to the DEFS (D22) of the smart TV

Step S020: Further, the DEFS (D22) of the smart TV sends the invoking success result to the DEFS (D12) of the smartphone.

Step S021: The DEFS (D12) of the smartphone feeds back the invoking success result to the invoking application "Changlian" (D10).

### Embodiment 2

An authorization state type corresponding to this embodiment is that a "Changlian" APP (D10) in a smartphone invokes a "call transfer service" on a smart TV for the first time, and a prior authorization of a user is not canceled.

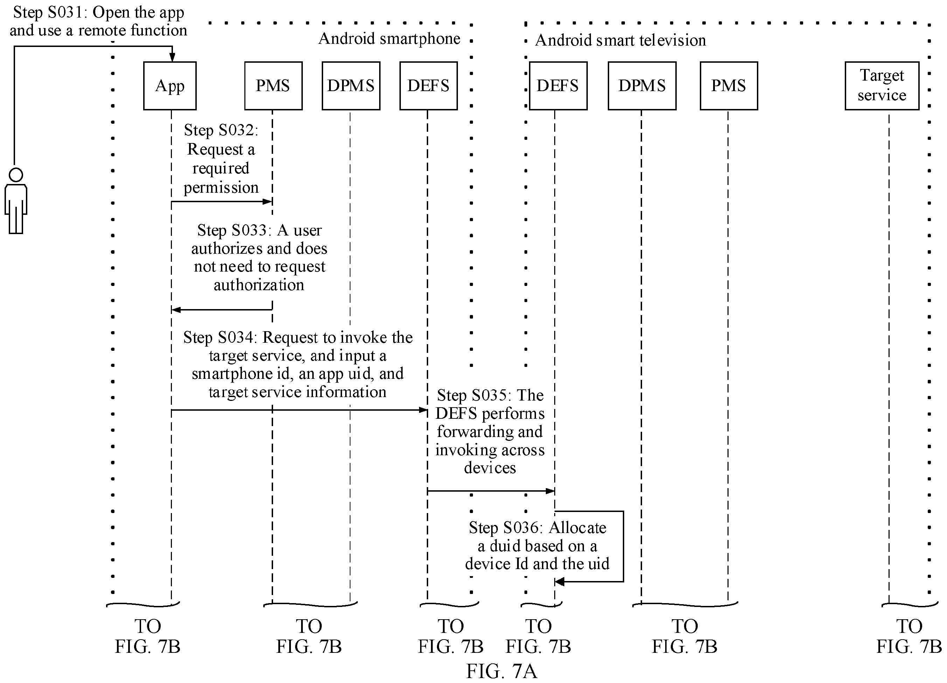

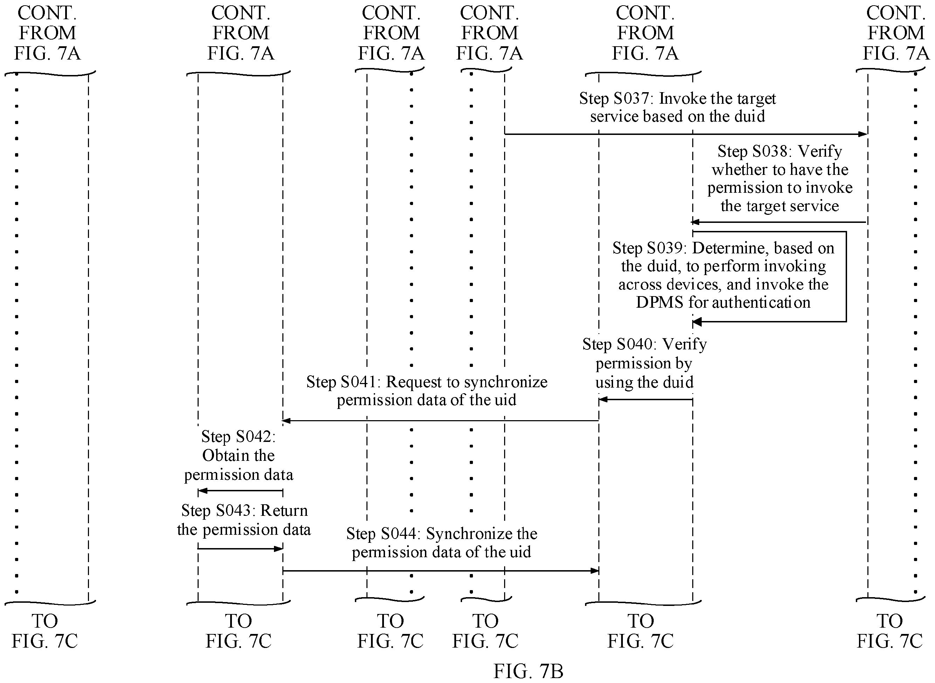

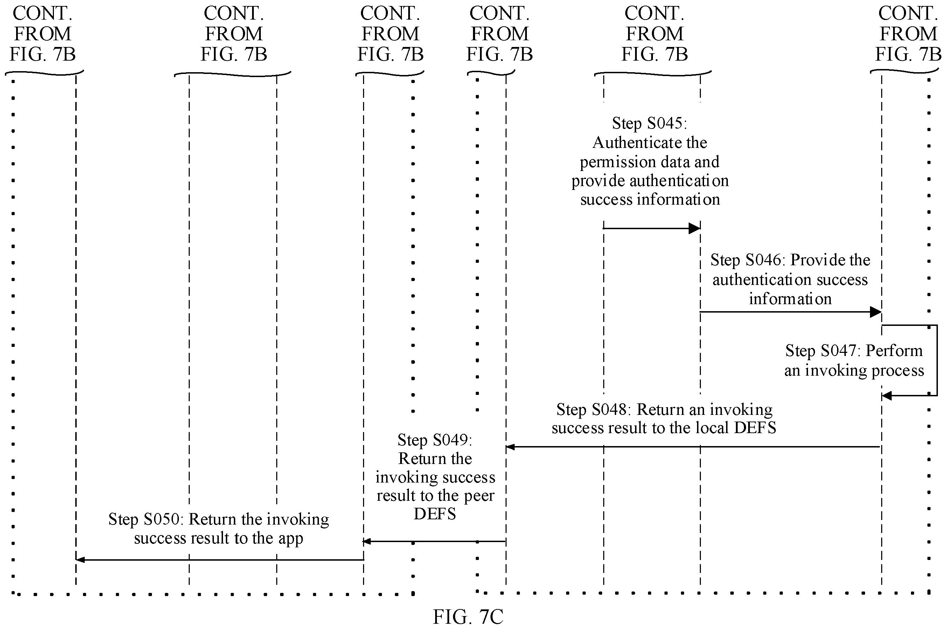

FIG. 7A to FIG. 7C are a schematic diagram of interaction between an invoking device and a target device according to Embodiment 2 of the present invention. As shown in FIG. 7A to FIG. 7C, a cross-device invoking process in Embodiment 2 is implemented by using a plurality of steps shown in the accompanying drawing. Specifically, an implementation formed by the plurality of steps is as follows:

Step S031: A user opens a "Changlian" APP (D10) on a smartphone, and selects to use a "call transfer service" on a smart TV

Step S032: The "Changlian" APP (D10) invokes a PMS (D11) interface of the smartphone to request permission required for invoking the "call transfer service" on the smart TV

Step S033: The PMS (D11) responds to request information for the "Changlian" APP (D10) to invoke the "call transfer service" on the smart TV, and determines whether the request information is a first request of the "Changlian" APP (D10) to invoke the "call transfer service" on the smart TV The PMS (D11) does not need to request user authorization when determining that the request information is a non-initial request of the "Changlian" APP (D10) and the "call transfer service" is requested to be invoked.

Step S034: The "Changlian" APP directly sends a smartphone ID (device ID), a "Changlian" ID (APP ID), and information used to identify the "call transfer service" (target service) to a DEFS (D12).

Step S035: The DEFS (D12) of the smartphone sends a remote service invoking request to the smart TV, where the remote service invoking request sent to the smart TV includes the smartphone ID (device ID), the "Changlian" ID (APP ID), and the information used to identify the "call transfer service" (target service).

Step S036: After receiving the remote service invoking request sent by the smartphone, a DEFS (D22) of the smart TV allocates a distributed user ID in a resource pool of a reserved distributed user ID (DUID) of the smart TV based on the smartphone ID and the "Changlian" ID in the remote service invoking request, and uses the allocated distributed user ID as an invoking body ID in a current cross-device invoking operation.

Step S037: Further, the DEFS (D22) of the smart TV sends a target service invoking request of an invoking body to a target service (D20) of the smart TV, where the target service invoking request includes the invoking body ID. In this case, the invoking body ID is the DUID allocated based on the smartphone ID and the "Changlian" ID.

Step S038: After receiving the target service invoking request, the target service (D20) invokes an android PMS (D21) native authentication interface of the smart TV based on the DUID to perform permission verification, to determine whether the "Changlian" APP has an invoking permission to invoke the "call transfer service" on the smart TV

Step S039: The PMS (D21) of the smart TV identifies that a type of the invoking body ID in the target service invoking request is the DUID, and may further determine that the target service invoking request of the invoking body is a cross-device remote service invoking request.

Step S040: When determining that the target service invoking request of the invoking body is the cross-device remote service invoking request, the PMS (D21) of the smart TV directly invokes a DPMS (D23) interface of the smart TV to request authentication.

Step S041: After receiving an authentication request of whether the invoking body has the invoking permission to invoke the target service, the DPMS (D23) of the smart TV requests to invoke the DPMS (D13) of the smartphone in a cross-device manner, to request the permission information that is of the invoking body "Changlian" and that is about invoking the "call transfer service". Specially, the DPMS (D23) invokes the DEFS (D22) interface of the smart TV to communicate with the smartphone, and sends an invoking instruction of the permission information to the DEFS (D12) of the smartphone, where the permission information invoking instruction sent to the DEFS (D12) of the smartphone includes the "Changlian" ID and the information used to identify the "call transfer service".

Step S042: The DEFS (D12) of the smartphone sends the received permission information invoking instruction to the DPMS (D13) of the smartphone, and the DPMS (D13) of the smartphone requests the PMS (D11) of the smartphone according to the permission information invoking instruction for the "Changlian" to invoke the permission information for the "call transfer service" on the smart TV

Step S043: The PMS (D11) of the smartphone feeds back, to the DPMS (D13) of the smartphone, queried permission information for the "Changlian" to invoke the "call transfer service" on the smart TV

Step S044: The DPMS (D13) of the smartphone further sends, to the DEFS (D22) of the smart TV through the DEFS (D12), the permission information for the "Changlian" to invoke the "call transfer service" on the smart TV Further, the DEFS (D22) of the smart TV feeds back the permission information for the "Changlian" to invoke the "call transfer service" on the smart TV to the DPMS (D23) of the smart TV, to implement synchronization of the invoking permission of the "Changlian" APP (D10) between the smartphone and the smart TV

Step S045: The DPMS (D23) of the smart TV authenticates the permission information for the "Changlian" to invoke the "call transfer service" on the smart TV, to determine whether the "Changlian" has the invoking permission of the "call transfer service" on the smart TV Because a user has previously performed authorization and the authorization is not canceled, an authentication result is that the "Changlian" has the invoking permission to invoke the "call transfer service" on the smart TV, and determines that the authentication succeeds. Further, the authentication result is sent to the PMS (D21) of the smart TV

Step S046: When the authentication performed by the DPMS (D23) on the permission information for the "Changlian" to invoke the "call transfer service" on the smart TV succeeds, the PMS (D21) of the smart TV further feeds back the authentication to the target service (D20) of the smart TV by using information.

Step S047: The target service (D20) executes the call transfer service after obtaining the information indicating that the authentication succeeds, and the invoking succeeds.

Step S048: The target service (D20) sends an invoking success result to the DEFS (D22) of the smart TV

Step S049: Further, the DEFS (D22) of the smart TV sends the invoking success result to the DEFS (D12) of the smartphone.

Step S050: The DEFS (D12) of the smartphone feeds back the invoking success result to the invoking application "Changlian" (D10).

### Embodiment 3

An authorization state type corresponding to this embodiment is that a "Changlian" APP (D10) in a smartphone is not the first time to invoke a "call transfer service" on a smart TV, and a prior authorization has been canceled.

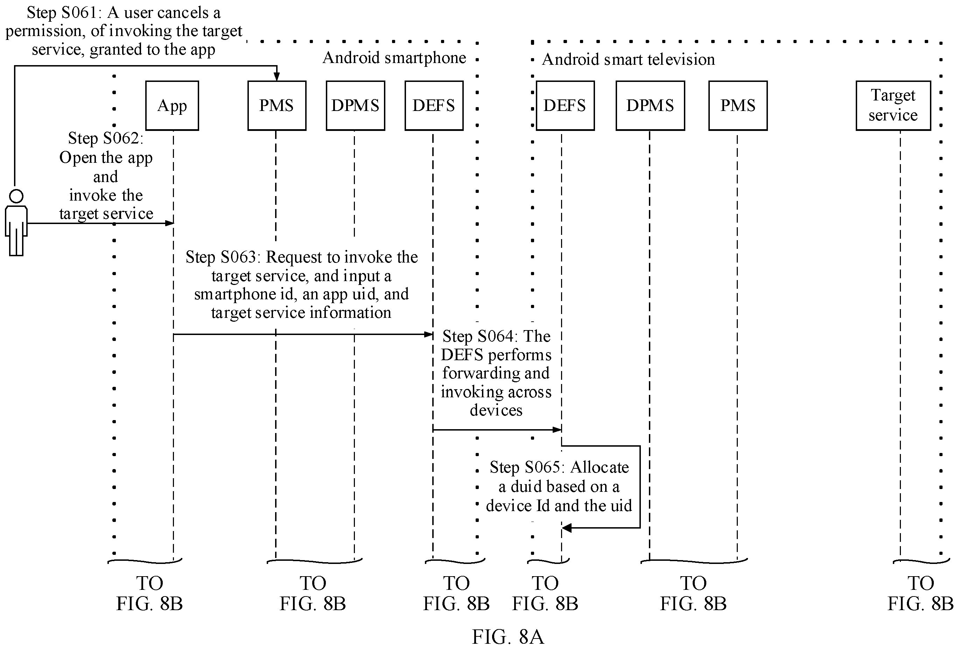

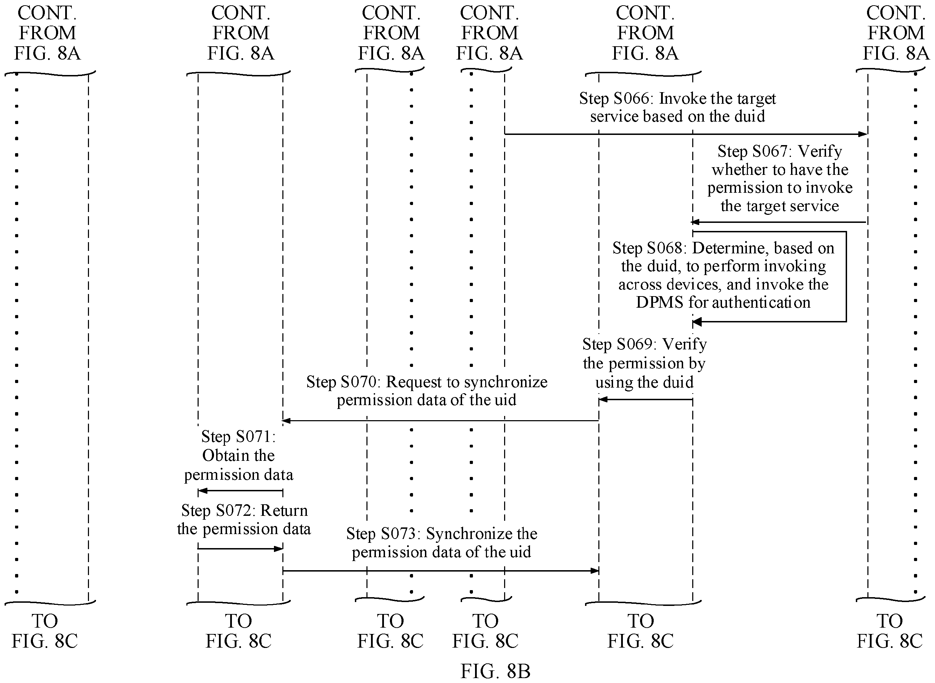

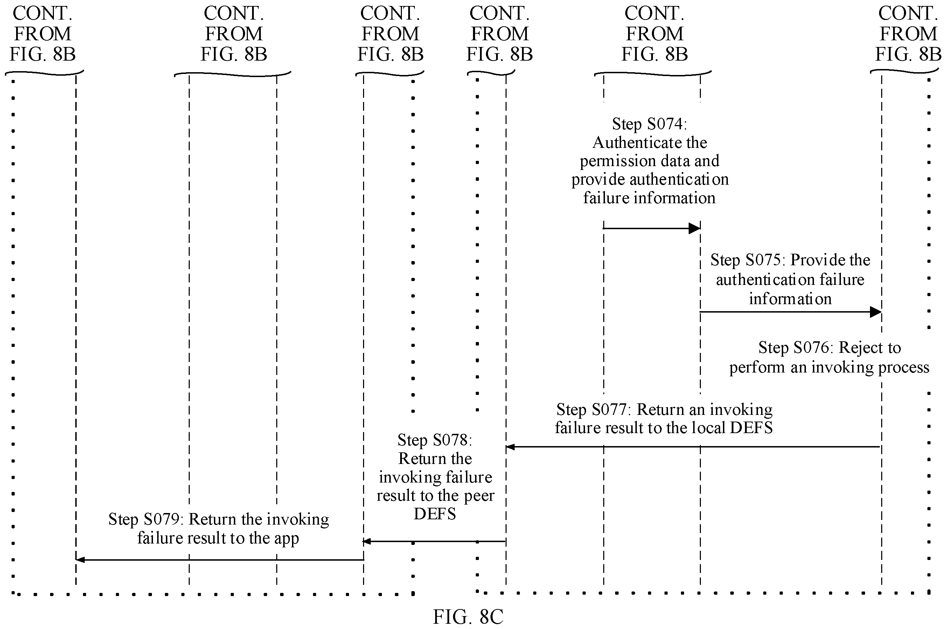

FIG. 8A to FIG. 8C are a schematic diagram of interaction between an invoking device and a target device according to Embodiment 3 of the present invention. As shown in FIG. 8A to FIG. 8C, a cross-device invoking process in Embodiment 3 is implemented by using a plurality of steps shown in the accompanying drawing. Specifically, an implementation formed by the plurality of steps is as follows:

Step S061: A user cancels, in related settings of a smartphone, a permission of a "Changlian" APP (D10) to invoke a "call transfer service" on a smart TV

Step S062: The user opens the "Changlian" APP (D10) on the smartphone, and selects to use the "call transfer service" on the smart TV

Step S063: The "Changlian" APP (D10) invokes a PMS (D11) interface of the smartphone to request permission required for invoking the "call transfer service" on the smart TV The PMS (D11) responds to request information for the "Changlian" to invoke the "call transfer service" on the smart TV, and determines whether the request information is that the "Changlian" APP (D10) requests to invoke the "call transfer service" on the smart TV for the first time. When determining that the request information is that the "Changlian" APP (D10) is not the first time to request to invoke the "call transfer service" and that the "Changlian" APP (D10) requests to invoke the "call transfer service", the PMS (D11) directly transfers a smartphone ID (device ID), a "Changlian" ID (APP ID), and information used to identify the "call transfer service" (target service) to a DEFS (D12) without requesting user authorization, to invoke a DEFS (D12) interface of the smartphone to communicate with the smart TV

Step S064: The DEFS (D11) of the smartphone sends a remote service invoking request to the smart TV, where the remote service invoking request sent to the smart TV includes the smartphone ID (device ID), the "Changlian" ID (APP ID), and the information used to identify the "call transfer service" (target service).

Step S065: After receiving the remote service invoking request sent by the smartphone, the DEFS (D12) of the smart TV allocates a distributed user ID in a resource pool of a reserved distributed user ID (DUID) of the smart TV based on the smartphone ID and the "Changlian" ID in the remote service invoking request, and uses the allocated distributed user ID as an invoking body ID in a current cross-device invoking operation.

Step S066: The DEFS (D22) of the smart TV sends a target service invoking request of an invoking body to a target service (D20) of the smart TV, where the target service invoking request includes the invoking body ID. In this case, the invoking body ID is the DUID allocated based on the smartphone ID and the "Changlian" ID.

Step S067: After receiving the target service invoking request, the target service (D20) invokes an android PMS (D21) native authentication interface of the smart TV based on the DUID to perform permission verification, to determine whether the "Changlian" APP (D10) has an invoking permission to invoke the "call transfer service" on the smart TV

Step S068: Further, the PMS (D21) of the smart TV identifies that a type of the invoking body ID in the target service invoking request is the DUID, and may further determine that the target service invoking request of the invoking body is a cross-device remote service invoking request.

Step S069: When determining that the target service invoking request of the invoking body is the cross-device remote service invoking request, the PMS (D21) of the smart TV directly invokes a DPMS (D23) interface of the smart TV to request authentication.

Step S070: After receiving an authentication request of whether the invoking body has the invoking permission to invoke the target service, the DPMS (D23) of the smart TV requests to invoke the DPMS (D13) of the smartphone in a cross-device manner, to request the permission information that is of the invoking body "Changlian" and that is about invoking the "call transfer service". Specially, the DPMS (D23) invokes the DEFS (D22) interface of the smart TV to communicate with the smartphone, and sends an invoking instruction of the permission information to the DEFS (D12) of the smartphone, where the permission information invoking instruction sent to the DEFS (D12) of the smartphone includes the "Changlian" ID and the information used to identify the "call transfer service".

Step S071: The DEFS (D12) of the smartphone sends the received permission information invoking instruction to the DPMS (D13) of the smartphone, and the DPMS (D13) of the smartphone requests the PMS (D11) of the smartphone according to the permission information invoking instruction for the "Changlian" to invoke the permission information for the "call transfer service" on the smart TV

Step S072: The PMS (D11) of the smartphone feeds back the queried permission information of "Changlian" to invoke the "call transfer service" on the smart TV to the DPMS (D13) of the smartphone.

Step S073: The DPMS (D13) of the smartphone further sends, to the DEFS (D22) of the smart TV through the DEFS (D12), the permission information for the "Changlian" to invoke the "call transfer service" on the smart TV Further, the DEFS (D22) of the smart TV feeds back the permission information for the "Changlian" to invoke the "call transfer service" on the smart TV to the DPMS (D23) of the smart TV, to implement synchronization of the invoking permission of the "Changlian" APP (D10) between the smartphone and the smart TV

Step S074: The DPMS (D23) of the smart TV authenticates the permission information for the "Changlian" to invoke the "call transfer service" on the smart TV, to determine whether the "Changlian" has the invoking permission of the "call transfer service" on the smart TV Because a user has previously canceled authorization, an authentication result is that the "Changlian" has no invoking permission to invoke the "call transfer service" on the smart TV, and the authentication is failed. Further, the DPMS (D23) of the smart TV sends the authentication result to the PMS (D21) of the smart TV

Step S075: When the authentication of the permission information for the "Changlian" to invoke the "call transfer service" on the smart TV is failed by the DPMS (D23), the PMS (D21) of the smart TV further feeds back authentication failure information to the target service (D20) of the smart TV

Step S076: The target service (D20) rejects to execute the call transfer service after obtaining the information indicating the authentication failure, and the invoking fails.

Step S077: The target service (D20) sends an invoking failure result to the DEFS (D22) of the smart TV

Step S078: Further, the DEFS (D22) of the smart TV sends the invoking failure result to the DEFS (D12) of the smartphone.

Step S079: The DEFS (D12) of the smartphone feeds back the invoking failure to the invoking application "Changlian" (D10).

After the invoking fails, if the user wants to implement the target service invoking again, the user may adjust, in corresponding settings on the smartphone end, the permission information for the "Changlian" APP (D10) to invoke the "call transfer service" on the smart TV, that is, perform manual authorization. After the manual authorization is completed, when the "Changlian" applies to the smart TV for invoking the "call transfer service" again, the authorization state type in Embodiment 2 is met, and after the authentication on the smart TV succeeds, the invoking succeeds.

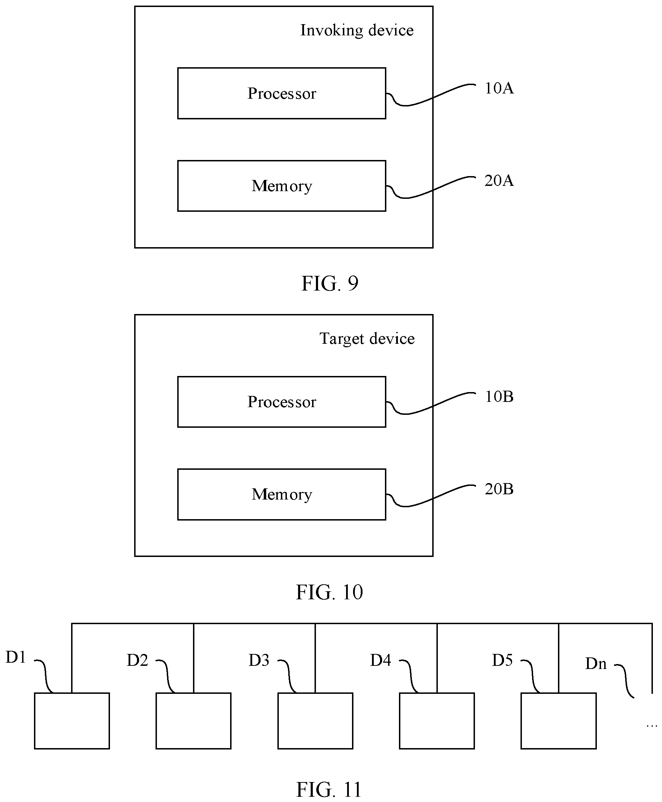

An embodiment of the present invention further provides an invoking device. FIG. 9 is a schematic diagram of a structure of the invoking device provided in this embodiment of the present invention. The invoking device includes a processor 10A and a memory 20A. The memory 20A is configured to store at least one instruction. When the instruction is loaded and executed by the processor 10A, the following remote service invoking method based on an invoking device is implemented:
sending a remote service invoking request to a target device, where the remote service invoking request includes an invoking device ID, an invoking application ID, and target service information;
receiving a permission information invoking instruction sent by the target device, where the permission information invoking instruction includes the invoking application ID and the target service information; and
sending corresponding permission information to the target device according to the permission information invoking instruction, where the permission information is used to reflect whether the invoking application has an invoking permission of a target service.

Further, before the sending a remote service invoking request to a target device, the method further includes:
in response to the remote service invoking request, determining whether the invoking application requests to invoke the target service for the first time, and if yes, performing a permission determining process, or if no, performing the process of sending a remote service invoking request to a target device.

The permission determining process includes:
determining the permission information based on a user and locally storing the permission information.

Further, the process of determining the permission information based on a user and locally storing the permission information includes:
generating an authorization determining interface, so that the user selects, based on the authorization determining interface, whether the invoking application has the invoking permission of the target service.

An embodiment of the present invention further provides a remote service invoking control apparatus based on a target device. FIG. 10 is a schematic diagram of a structure of the remote service invoking control apparatus based on a target device provided in this embodiment of the present invention. The target device includes a processor 10B and a memory 20B. The memory 20B is configured to store at least one instruction. When the instruction is loaded and executed by the processor 10B, the following remote service invoking method based on a target device is implemented:
receiving a remote service invoking request sent by an invoking device, where the remote service invoking request includes an invoking device ID, an invoking application ID, and target service information;
sending a permission information invoking instruction to the invoking device, where the permission information invoking instruction includes the invoking application ID and the target service information;
receiving permission information sent by the invoking device, where the permission information is used to reflect whether the invoking application has an invoking permission of a target service; and
determining, based on the permission information, whether the invoking application has the invoking permission of the target service, and if yes, performing invoking of the target service by the invoking application in the invoking device.

Further, before the sending a permission information invoking instruction to the invoking device, the method further includes:
allocating a distributed user ID as an invoking body ID based on the invoking device ID and the invoking application ID, where the distributed user ID is used to identify a device and an application; and
determining a type of the invoking body ID, and if the type of the invoking body ID is the distributed user ID, performing the process of sending a permission information invoking instruction to the invoking device, or if the type of the invoking body ID is a local ID, performing local invoking permission verification.

The method further includes: in the process of determining, based on the permission information, whether the invoking application has the invoking permission of the target service, if no, rejecting the invoking of the target service by the invoking application in the invoking device, and returning invoking failure information to the invoking device.

An embodiment of the present invention further provides a distributed system. FIG. 11 is a schematic diagram of a structure of the distributed system provided in this embodiment of the present invention. The distributed system may include a plurality of devices (D1, D2, D3, D4, D5, Dn), where the plurality of devices include at least one invoking device and at least one target device. Login accounts of the plurality of devices may be a same account (for example, a same Huawei account is used for all devices).

An embodiment of the present invention further provides a computer-readable storage medium, where a computer program is stored. When the computer program is executed by a processor, the foregoing remote service invoking method based on an invoking device or the foregoing remote service invoking method based on a target device is implemented.

It should be noted that, the device in embodiments of the present invention may include but is not limited to a personal computer (Personal Computer, PC), a personal digital assistant (Personal Digital Assistant, PDA), a wireless handheld device, a tablet computer, a mobile phone, an MP3 player, or an MP4 player.

It may be understood that, the application may be an application (nativeApp) installed on a terminal, or may be a web application (webApp) of a browser on the terminal, which is not limited in embodiments of the present invention.

It may be clearly understood by persons skilled in the art that, for the purpose of convenient and brief description, for a detailed work process of the foregoing system, apparatus, and unit, refer to a corresponding process in the foregoing method embodiment. Details are not described herein again.

In the several embodiments provided in the present invention, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer apparatus (which may be a personal computer, a server, or a network apparatus) or a processor (Processor) to perform some of the steps of the methods described in embodiments of the present invention. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely preferable embodiments of the present invention, but are not intended to limit the present invention. Any modification, equivalent replacement, or improvement made within the spirit and principle of the present invention should fall within the protection scope of the present invention.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of the present invention.

## Claims

1. A remote service invoking method based on an invoking device, comprising:
sending a remote service invoking request to a target device, wherein the remote service invoking request comprises an invoking device ID, an invoking application ID, and target service information;
receiving a permission information invoking instruction sent by the target device, wherein the permission information invoking instruction comprises the invoking application ID and the target service information; and
sending corresponding permission information to the target device according to the permission information invoking instruction, wherein the permission information is used to reflect whether an invoking application has an invoking permission of a target service.

2. The method according to claim 1, wherein before the sending a remote service invoking request to a target device, the method further comprises:
in response to the remote service invoking request, determining whether the invoking application requests to invoke the target service for the first time, and if yes, performing a permission determining process, or if no, performing the process of sending a remote service invoking request to a target device; and
the permission determining process comprises:
determining the permission information based on a user and locally storing the permission information.

3. The method according to claim 2, wherein
the process of determining the permission information based on a user and locally storing the permission information comprises:
generating an authorization determining interface, so that the user selects, based on the authorization determining interface, whether the invoking application has the invoking permission of the target service.

4. A remote service invoking method based on a target device, comprising:
receiving a remote service invoking request sent by an invoking device, wherein the remote service invoking request comprises an invoking device ID, an invoking application ID, and target service information;
sending a permission information invoking instruction to the invoking device, wherein the permission information invoking instruction comprises the invoking application ID and the target service information;
receiving permission information sent by the invoking device, wherein the permission information is used to reflect whether an invoking application has an invoking permission of a target service; and
determining, based on the permission information, whether the invoking application has the invoking permission of the target service, and if yes, performing invoking of the target service by the invoking application in the invoking device.

5. The method according to claim 4, wherein
before the sending a permission information invoking instruction to the invoking device, the method further comprises:
allocating a distributed user ID as an invoking body ID based on the invoking device ID and the invoking application ID, wherein the distributed user ID is used to identify a device and an application; and
determining a type of the invoking body ID, and if the type of the invoking body ID is the distributed user ID, performing the process of sending a permission information invoking instruction to the invoking device, or if the type of the invoking body ID is a local ID, performing local invoking permission verification.

6. The method according to claim 4, wherein
in the process of determining, based on the permission information, whether the invoking application has the invoking permission of the target service, if no, rejecting the invoking of the target service by the invoking application in the invoking device, and returning invoking failure information to the invoking device.

7. An invoking device, wherein the invoking device comprises a processor and a memory, the memory is configured to store at least one instruction, and when the instruction is loaded and executed by the processor, the remote service invoking method based on the invoking device according to any one of claims 1 to 3 is implemented.

8. A target device, wherein the target device comprises a processor and a memory, the memory is configured to store at least one instruction, and when the instruction is loaded and executed by the processor, the remote service invoking method based on the target device according to any one of claims 4 to 6 is implemented.

9. A system, comprising:
at least one invoking device according to claim 7, and at least one target device according to claim 8.

10. A computer-readable storage medium, storing a computer program, wherein when being executed by a processor, the computer program implements the remote service invoking method based on the invoking device according to any one of claims 1 to 3 or the remote service invoking method based on the target device according to any one of claims 4 to 6.
